# EUROPEAN PATENT APPLICATION

(11) **EP 4 318 027 A1**
(43) Date of publication of application: **07.02.2024**
(21) Application number: 22783880.2
(22) Date of filing: 24.03.2022
(51) Int. Cl.: G01S 7/481

(54) **SYNCHRONOUS CONTROL DEVICE AND METHOD FOR LIDAR**

(30) Priority: 09.04.2021 CN 202110383460
(71) Applicant: Huawei Technologies Co., Ltd., Longgang Shenzhen, Guangdong 518129 (CN)
(72) Inventor: WANG, Yuemeng, Shenzhen, Guangdong 518129 (CN); WANG, Wei, Shenzhen, Guangdong 518129 (CN); YU, Anliang, Shenzhen, Guangdong 518129 (CN)
(74) Representative: Maiwald GmbH
(86) International application number: PCT/CN2022/082828
(87) International publication number: WO 2022/213813

(57) **Abstract**

A synchronization control apparatus for LiDAR is provided, and the apparatus is applicable to fields such as automated driving, intelligent driving, and self driving. The apparatus includes: a synchronization signal transceiver module group (601), a scanning signal transceiver module group (602), a controller (603), and a scanning mirror (604). The scanning mirror (604) includes a plurality of reflective surfaces, the plurality of reflective surfaces include corresponding identifiers, and the plurality of reflective surfaces include a first reflective surface (605). The controller (603) is configured to control the synchronization signal transceiver module group (601) to transmit a first detecting signal. The synchronization signal transceiver module group (601) is configured to receive a first echo signal. The controller (603) is configured to determine that the first echo signal includes an echo signal obtained after the first detecting signal is reflected by a first identifier (606) corresponding to the first reflective surface (605), and control the scanning signal transceiver module group (602) to transmit a second detecting signal to the first reflective surface (605) in a first manner, where the first identifier (606) corresponds to the first manner. A synchronization control apparatus and method for LiDAR, LiDAR, a terminal, and a computer-readable storage medium are further provided. Scanning space synchronization between a plurality of frames of point clouds and synchronization between the first reflective surface (605) and a generation manner of a point cloud corresponding to the first reflective surface (605) can be implemented, so that costs are low and flexibility of LiDAR control is improved.

## Description

This application claims priority to Chinese Patent Application No. 202110383460.7, filed with the China National Intellectual Property Administration on April 9, 2021 and entitled "SYNCHRONIZATION CONTROL APPARATUS AND METHOD FOR LIDAR", which is incorporated herein by reference in its entirety.

### TECHNICAL FIELD

This application relates to the field of sensor technologies, and in particular, to a synchronization control apparatus and method for LiDAR.

### BACKGROUND

A light detection and ranging (light detection and ranging, LiDAR) technology is an optical measurement technology, where a detecting signal is sent to a target by using a laser source, and information such as a distance between the target and a light source may be measured by measuring a time difference (also referred to as time of flight (time of flight, TOF) of light) between sending of the detecting signal and receiving of an echo signal, to generate a point cloud (point cloud). The point cloud is widely used in fields such as three-dimensional modeling, automated driving, advanced assisted driving, surveying and mapping, archaeology, geography, geomorphology, seismology, forestry, remote sensing, and atmospheric physics. Based on a scanning manner of a scanner, LiDAR can be divided into manners such as mechanical pan-tilt-zoom scanning, a scanning mirror, an optical phased array, a flash (flash), and the like.

The scanning mirror is one of mainstream architectures of current LiDAR. An implementation of the scanning mirror may include an oscillating mirror, a rotating mirror, a polygon (polygon) mirror, and the like. Compared with another implementation, the polygon mirror has a feature of a high point cloud frame rate. One reflective surface of the polygon mirror usually correspondingly generates one frame of point cloud. The polygon mirror can rotate clockwise or counterclockwise by 360 degrees to implement an output of a plurality of frames of point clouds, so that object detection resolution can be improved, especially for a moving object, a change of the object can be quickly detected. However, when a frame rate is increased, a higher requirement is also imposed on synchronization of generating the point cloud by the reflective surface. In an existing synchronization control manner, usually, only scanning space synchronization between two adjacent frames of point clouds or a plurality of adjacent frames of point clouds can be implemented, and costs are high; and in addition, synchronization control cannot be implemented between the reflective surface and a generation manner of a point cloud corresponding to the reflective surface.

### SUMMARY

In view of this, a synchronization control apparatus and method for LiDAR, LiDAR, a terminal, and a readable storage medium are proposed.

According to a first aspect, an embodiment of this application provides a synchronization control apparatus for LiDAR, and the apparatus includes a synchronization signal transceiver module group, a scanning signal transceiver module group, a controller, and a scanning mirror, where the scanning mirror includes a plurality of reflective surfaces, the plurality of reflective surfaces include corresponding identifiers, and the plurality of reflective surfaces include a first reflective surface. The controller is configured to control the synchronization signal transceiver module group to transmit a first detecting signal; the synchronization signal transceiver module group is configured to receive a first echo signal; and the controller is configured to determine that the first echo signal includes an echo signal obtained after the first detecting signal is reflected by a first identifier corresponding to the first reflective surface, and control the scanning signal transceiver module group to transmit a second detecting signal to the first reflective surface in a first manner, where the first identifier corresponds to the first manner.

Based on the foregoing technical solution, the plurality of reflective surfaces of the scanning mirror include the corresponding identifiers. The synchronization signal transceiver module group transmits the first detecting signal and receives the first echo signal. When determining that the first echo signal includes the echo signal obtained after the first detecting signal is reflected by the first identifier corresponding to the first reflective surface, the controller controls the scanning signal transceiver module group to transmit the second detecting signal to the first reflective surface, so that one time of space scanning by using the first reflective surface is completed, and a frame of point cloud corresponding to the first reflective surface may be generated. The plurality of reflective surfaces of the scanning mirror all include the corresponding identifiers. When determining an echo signal reflected by a corresponding identifier of each reflective surface, the controller may control the scanning signal transceiver module group to transmit the second detecting signal to each reflective surface, so that one time of space scanning by using each reflective surface is completed, and one frame of point cloud corresponding to each reflective surface may be generated, thereby implementing scanning space synchronization between two or more adjacent frames without using hardware such as an angle encoder. In addition, a manner (namely, the first manner) of transmitting the second detecting signal corresponds to the first identifier, that is, corresponds to the first reflective surface, so that the scanning signal transceiver module group may transmit the second detecting signal to the first reflective surface in a manner corresponding to the first reflective surface. Therefore, synchronization control of the first reflective surface and a generation manner of a point cloud corresponding to the first reflective surface is implemented. To be specific, a corresponding generation manner may be determined for one frame of point cloud, so that flexibility of LiDAR control is increased, a requirement for consistency between the first reflective surface and another reflective surface is reduced, costs are lower, and reliability is higher.

According to the first aspect, in a first possible implementation of the first aspect, different reflective surfaces have different identifiers.

Based on the foregoing technical solution, different reflective surfaces may be distinguished by using different identifiers. When determining that the first echo signal includes an echo signal obtained after the first detecting signal is reflected by an identifier, the controller may accurately locate, by using the identifier, a reflective surface at which the identifier is located. In addition to implementing scanning space synchronization of two or more adjacent frames, a point cloud generation manner corresponding to each reflective surface may be separately controlled, to implement differentiated control, that is, differentiated synchronization control of different frames of point cloud is implemented, so that flexibility of synchronization control is further improved, a consistency requirement on each reflective surface of the scanning mirror is reduced, and costs are reduced.

According to the first aspect or the first possible implementation of the first aspect, in a second possible implementation of the first aspect, a first feature set of the first echo signal matches a preset feature set, and there is a correspondence between the preset feature set and the first identifier.

Based on the foregoing technical solution, an identifier reflecting the first echo signal may be identified based on the first feature set of the first echo signal, so that a corresponding reflective surface is determined.

According to the first aspect or each possible implementation of the first aspect, in a third possible implementation of the first aspect, the first identifier is a start identifier of the first reflective surface, and a transmission moment of the second detecting signal is a start moment of frame data corresponding to the first reflective surface.

Based on the foregoing technical solution, the controller may control, based on a moment at which the first identifier is identified, the scanning signal transceiver module group to work at the start moment of the point cloud corresponding to the first reflective surface. That is, the second detecting signal is transmitted to the first reflective surface in the first manner corresponding to the first identifier, to perform space scanning, to obtain a complete frame of point cloud corresponding to the first reflective surface. Therefore, when the first identifier is identified, reliability of performing space scanning by using the first reflective surface is ensured, and costs are low, scanning space synchronization of two or more adjacent frames is implemented.

According to the first aspect or the foregoing possible implementations of the first aspect, in a fourth possible implementation of the first aspect, a second identifier is further disposed on the first reflective surface; and the controller is further configured to control the scanning mirror to rotate based on the echo signal obtained after the first detecting signal is reflected by the first identifier, an echo signal obtained after the first detecting signal is reflected by the second identifier, and preset rotation information.

Based on the foregoing technical solution, rotation information of the scanning mirror may be corrected by using the first identifier and the second identifier on the first reflective surface, to implement precise synchronization control of rotation of the scanning mirror in a space scanning process.

According to the first aspect or the foregoing possible implementations of the first aspect, in a fifth possible implementation of the first aspect, the first identifier is disposed at an edge location of the first reflective surface.

Based on the foregoing technical solution, by identifying an echo signal reflected by the first identifier, whether a reflective surface rotates to the first reflective surface is determined in a timely and accurate manner, so that impact of the identifier on space scanning may be reduced or avoided.

According to the first aspect or the foregoing possible implementations of the first aspect, in a sixth possible implementation of the first aspect, a wavelength range of the first detecting signal is different from that of the second detecting signal.

Based on the foregoing technical solution, mutual interference between the first detecting signal and the second detecting signal can be avoided, and reliability and accuracy of scanning space synchronization of two or more adjacent frames and space scanning performed by using a reflective surface are ensured.

According to any one of the second to the sixth possible implementations of the first aspect, in a seventh possible implementation of the first aspect, the first feature set includes any one or more of a waveform feature of the first echo signal, a pattern feature corresponding to the first echo signal, or a time feature corresponding to the first echo signal.

Based on the foregoing technical solution, a corresponding identifier may be identified based on a difference in a waveform feature, a pattern feature, a time feature, and the like of the echo signal obtained after the first detecting signal is reflected by different identifiers.

According to the first aspect or the foregoing possible implementations of the first aspect, in an eighth possible implementation of the first aspect, the first identifier is disposed in any one or more of the following manners: coating, etching, film applying, material changing, and shape changing performed on the first reflective surface.

Based on the foregoing technical solution, the reflective surface is simply processed in the foregoing a plurality of manners, and the identifier is disposed, to distinguish the identifier from the reflective surface at which the identifier is located. Different reflective surfaces may be processed differently in the foregoing manners, to set different identifiers on the different reflective surfaces, and a cost of processing is low.

According to a second aspect, an embodiment of this application provides a synchronization control method for LiDAR, and the method includes: controlling a synchronization signal transceiver module group of LiDAR to transmit a first detecting signal; and determining that a first echo signal received by the synchronization signal transceiver module group includes an echo signal obtained after the first detecting signal is reflected by a first identifier of a first reflective surface of a scanning mirror included in the LiDAR, and controlling a scanning signal transceiver module group to transmit a second detecting signal to the first reflective surface in a first manner, where the first identifier corresponds to the first manner.

According to the second aspect, in a first possible implementation of the second aspect, identifiers of different reflective surfaces of the scanning mirror included in the LiDAR are different.

According to the second aspect or the first possible implementation of the second aspect, in a second possible implementation of the second aspect, a first feature set of the first echo signal matches a preset feature set, and there is a correspondence between the preset feature set and the first identifier.

According to the second aspect or each possible implementation of the second aspect, in a third possible implementation of the second aspect, the first identifier is a start identifier of the first reflective surface, and a transmission moment of the second detecting signal is a start moment of frame data corresponding to the first reflective surface.

According to the second aspect or the foregoing possible implementations of the second aspect, in a fourth possible implementation of the second aspect, a second identifier is further disposed on the first reflective surface, and the method further includes: controlling the scanning mirror to rotate based on the echo signal obtained after the first detecting signal is reflected by the first identifier, an echo signal obtained after the first detecting signal is reflected by the second identifier, and preset rotation information.

According to the second aspect or the foregoing possible implementations of the second aspect, in a fifth possible implementation of the second aspect, the first identifier is disposed at an edge location of the first reflective surface.

According to the second aspect or the foregoing possible implementations of the second aspect, in a sixth possible implementation of the second aspect, a wavelength range of the first detecting signal is different from that of the second detecting signal.

According to any one of the second to the sixth possible implementations of the second aspect, in a seventh possible implementation of the second aspect, the first feature set includes any one or more of a waveform feature of the first echo signal, a pattern feature corresponding to the first echo signal, or a time feature corresponding to the first echo signal.

According to the second aspect or the foregoing possible implementations of the second aspect, in an eighth possible implementation of the second aspect, the first identifier is disposed in any one or more of the following manners: coating, etching, film applying, material changing, and shape changing performed on the first reflective surface.

According to a third aspect, an embodiment of this application provides LiDAR, where the LiDAR includes the synchronization control apparatus for LiDAR according to one or more of the first aspect or the plurality of possible implementations of the first aspect.

According to a fourth aspect, an embodiment of this application provides a terminal. The terminal includes the synchronization control apparatus for LiDAR according to one or more of the first aspect or the plurality of possible implementations of the first aspect.

According to a fifth aspect, an embodiment of this application provides a synchronization control apparatus for LiDAR, and the apparatus includes at least one processor and a memory that is configured to store instructions that may be executed by the processor, where when the at least one processor is configured to execute the instructions, the synchronization control method for LiDAR according to one or more of the second aspect or the plurality of possible implementations of the second aspect is implemented.

According to a sixth aspect, an embodiment of this application provides a non-volatile computer-readable storage medium. The non-volatile computer-readable storage medium stores computer program instructions. When the computer program instructions are executed by a processor, the synchronization control method for LiDAR according to one or more of the second aspect or the plurality of possible implementations of the second aspect is implemented.

According to a seventh aspect, an embodiment of this application provides a computer program product. The computer program product includes computer-readable code or a non-volatile computer-readable storage medium carrying the computer-readable code. When the computer-readable code runs in an electronic device, a processor in the electronic device performs the synchronization control method for LiDAR according to one or more of the second aspect or the plurality of possible implementations of the second aspect is implemented.

For technical effects of the second aspect to the seventh aspect and the possible implementations of the aspects, refer to the first aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a schematic diagram of a structure of LiDAR in a polygon mirror scanning manner in a related technology;
FIG. 2 is a schematic diagram of generating adjacent frames of point clouds by using the LiDAR in FIG. 1;
FIG. 3 is a schematic diagram of synchronization control manner for LiDAR in a related technology;
FIG. 4 is another schematic diagram of synchronization control manner for LiDAR in a related technology;
FIG. 5 is a schematic diagram of a possible application scenario to which a synchronization control apparatus for LiDAR is applicable according to an embodiment of this application;
FIG. 6 is a diagram of a structure of a synchronization control apparatus for LiDAR according to an embodiment of this application;
FIG. 7 is another schematic diagram of a structure of a synchronization control apparatus for LiDAR according to an embodiment of this application;
FIG. 8 is another schematic diagram of a structure of a synchronization control apparatus for LiDAR according to an embodiment of this application;
FIG. 9 is a schematic diagram of a first reflective surface according to an embodiment of this application;
FIG. 10 is a schematic diagram of a scanning mirror according to an embodiment of this application;
FIG. 11 is a schematic diagram of implementing synchronization control based on the scanning mirror in FIG. 10 according to an embodiment of this application;
FIG. 12 is a flowchart of a synchronization control method for LiDAR according to an embodiment of this application; and
FIG. 13 is another schematic diagram of a structure of a synchronization control apparatus for LiDAR according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are shown in the accompanying drawings, unless otherwise specified, the accompanying drawings do not need to be drawn to scale.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some examples, methods, means, elements and circuits that are well-known to a person skilled in the art are not described in detail, so that the subject matter of this application is highlighted.

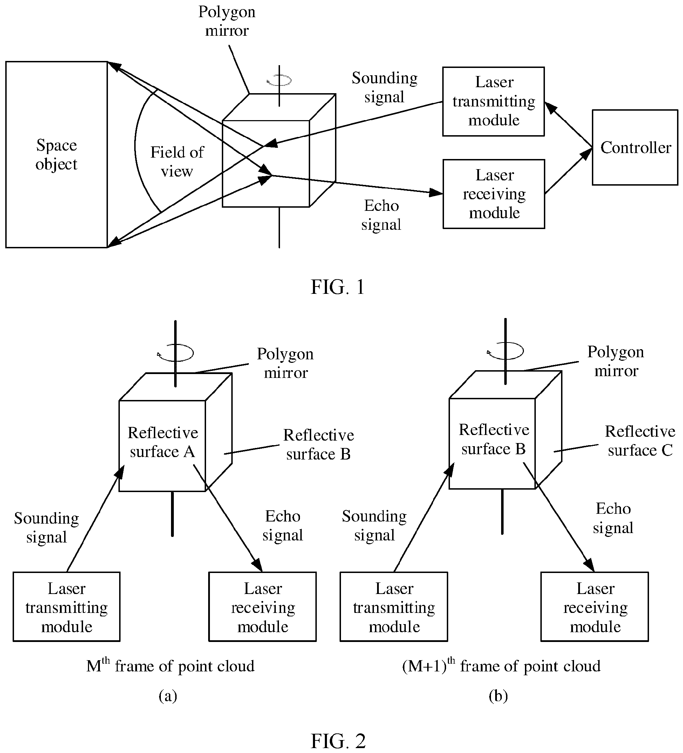

FIG. 1 is a schematic diagram of a structure of LiDAR in a polygon mirror scanning manner in a related technology. As shown in FIG. 1, the LiDAR may include a laser transmitting module, a laser receiving module, a polygon mirror (a four-sided mirror is used as an example in the figure), and a controller. A detecting signal sent by the laser transmitting module under control of the controlled is reflected by the polyhedron mirror to reach a space object, and is reflected by the space object to form an echo signal. The echo signal is reflected by the polyhedron mirror and then reaches the laser receiving module. As the polyhedron mirror rotates, directions of the detecting signal and the echo signal are changed. An angle range of the detecting signal and the echo signal is a detection field of view (field of view, FOV) of the LiDAR. The laser receiving module sends a received echo signal to the controller. The controller processes the echo signal and the detecting signal, and the polygon mirror rotates for one cycle, to generate a plurality of frames of point clouds. One frame of point cloud is data generated based on a group of detecting signals reflected by a reflective surface and corresponding echo signals. For example, the group of detecting signals may include a segment of continuous detecting signals in a time domain, or may include a plurality of segments of continuous detecting signals in a time domain, where various segments of detecting signals may be continuous with each other in a time domain, or may have a specific interval.

The following describes a synchronization control manner of the LiDAR in FIG. 1 in a related technology.

FIG. 2 is a schematic diagram of generating adjacent frames of point clouds by using the LiDAR in FIG. 1. As shown in FIG. 2, the polygon mirror of the LiDAR includes four reflective surfaces: a reflective surface A, a reflective surface B, a reflective surface C, and a reflective surface D (not shown in the figure). With rotation of the polygon mirror, when the polygon mirror rotates to a location at which a reflective surface can receive a detecting signal transmitted by the laser transmitting module, the laser transmitting module may send a group of detecting signals in a specific direction. After being reflected by the reflective surface, the group of detecting signals may reach an external environment. A group of echo signals reflected by the external environment may be returned through an original optical path. The laser receiving module may receive the group of echo signals, so that one time of space scanning using the reflective surface is completed, and one frame of point cloud may be generated by using the group of detecting signals and the group of echo signals. In this way, the polygon mirror rotates for one cycle, four times of space scanning may be completed, and four frames of point clouds are correspondingly generated. As shown in FIG. 2(a), when the polygon mirror rotates to a location at which the reflective surface A can receive the detecting signal transmitted by the laser transmitting module, a group of detecting signals are sent to the reflective surface A, so that one time of space scanning using the reflective surface A is completed. A group of detecting signals that are reflected by the reflective surface A and a corresponding group of echo signals and are used to generate an M^{th} (M is an integer greater than 0) frame of point cloud. As shown in FIG. 2(b), when the polygon mirror rotates to a location at which the reflective surface B can receive the detecting signal transmitted by the laser transmitting module, a group of detecting signals are sent to the reflective surface B, so that one time of space scanning using the reflective surface B is completed. A group of detecting signals that are reflected by the reflective surface B and a corresponding group of echo signals are used to generate an (M+1)^{th} frame of point cloud. The "specific direction" may be a specific fixed direction or a direction within a specific direction range, and is related to a location of the reflective surface.

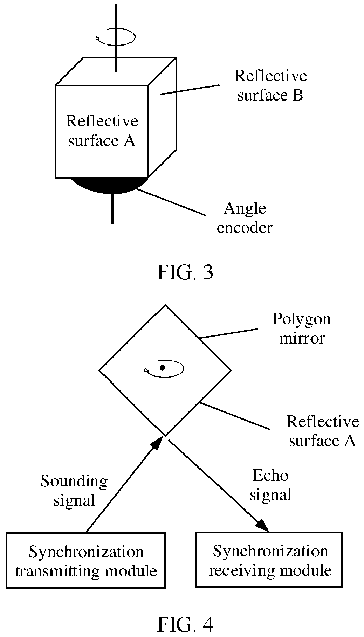

FIG. 3 is a schematic diagram of a synchronization control manner for LiDAR in a related technology. As shown in FIG. 3, an angle encoder is disposed below the polygon mirror of the LiDAR shown in FIG. 2, and synchronization control of the polygon mirror is implemented by using the angle encoder. To be specific, a 360-degree angle encoder is used to measure and feed back a rotation angle of the polyhedron mirror. A start rotation angle point of a specific frame is set as a 0-degree start angle of the angle encoder, and the polyhedron mirror rotates clockwise or counterclockwise from 0 degrees. The angle encoder periodically measures an angle by which the polyhedron mirror rotates from the 0-degree start angle. An angle by which the polyhedron mirror rotates may be obtained from a current angle value of the angle encoder. As shown in FIG. 3, four frames of point cloud may be generated by rotating the polyhedron mirror by 360 degrees. A start angle of a reflective surface corresponding to each frame of point cloud (or an angle corresponding to a joint between the reflective surface corresponding to the frame and a reflective surface corresponding to a previous frame) is set at an interval of Bi (i represents a frame number, where 1≤i≤4, Bi<90) degrees. It is assumed that a start rotation angle point of a frame corresponding to the reflective surface A is a start (0+B 1)-degree angle of the angle encoder. In this case, a start rotation angle point of a frame corresponding to the reflective surface B is a start (90+B2)-degree angle of the angle encoder. The following can be deduced by analogy. An angle corresponding to a start moment at which a detecting signal corresponding to each frame of point cloud is transmitted may be determined. The laser transmitting module transmits the detecting signal at the start moment, to implement scanning space synchronization between generated two adjacent frames of point clouds or a plurality of adjacent frames of point clouds, that is, the M^{th} frame of point cloud in FIG. 2(a) and the (M+1)^{th} frame of point cloud in FIG. 2(b) are separately generated through space scanning by using corresponding reflective surfaces (that is, the reflective surface A and the reflective surface B).

In this way, only scanning space synchronization between two adjacent frames of point clouds or a plurality of adjacent frames of point clouds can be implemented. Synchronization control of a reflective surface and a generation manner of a point cloud corresponding to the reflective surface cannot be implemented. In addition, costs of an angle encoder are high, and an optical encoder or a higher-level encoder may be required in an application scenario that requires high precision. In some application scenarios, for example, a vehicle-mounted scenario, reliability is low.

FIG. 4 is another schematic diagram of synchronization control manner for LiDAR in a related technology. As shown in FIG. 4, a synchronization transmitting module, a synchronization receiving module, and a reflector (not shown in the figure) are further disposed in the LiDAR in FIG. 2. The reflector is disposed at a specific location. When the polygon mirror rotates to a specific angle (that is, an angle corresponding to a joint of each reflective surface), a synchronization detecting signal reflected by the synchronization transmitting module is reflected by the polygon mirror and the reflector, and reaches the synchronization receiving module. However, when the polyhedron mirror rotates to another angle, the synchronization detecting signal cannot reach the synchronization receiving module. In this way, by using the synchronization transmitting module and the synchronization receiving module monitor, whether the polyhedron mirror rotates to the foregoing specific angle is monitored, so that a start moment of each scanning surface of the polyhedron mirror is obtained. The synchronization transmitting module starts to transmit the synchronization detecting signal when a previous frame ends. Only when the polygon mirror rotates to the foregoing specific angle, the detecting signal transmitted by the synchronization transmitting module can be reflected by the reflector and then received by the synchronization receiving module. A start moment of an angle of a frame corresponding to each reflective surface can be learned by using an echo signal of the synchronization receiving module, and a detection transmitting module group (not shown in the figure) is instructed to perform light emitting based on the start moment, so that scanning space synchronization between two adjacent frames of point clouds or a plurality of adjacent frames of point clouds generated by using polygon mirror scanning is implemented.

In this way, only the scanning space synchronization between two adjacent frames of point clouds or a plurality of adj acent frames of point clouds can be implemented by detecting that the polyhedron is rotated to the specific angle, and synchronization control of a reflective surface and a generation manner of a point cloud corresponding to the reflective surface cannot be implemented. In addition, a requirement for consistency of a plurality of reflective surfaces of the polyhedron is high, processing is difficult, and costs are high.

To resolve the foregoing technical problem, an embodiment of this application provides a synchronization control apparatus for LiDAR. The synchronization control apparatus may implement the scanning space synchronization between two adjacent frames of point clouds or a plurality of adjacent frames of point clouds with lower costs and higher reliability. In addition, synchronization control of a reflective surface and a generation manner (a transmission manner of a detecting signal used for space scanning) of a point cloud corresponding to the reflective surface may be implemented. To be specific, a corresponding generation manner may be determined for one frame of point cloud, so that flexibility of LiDAR control is increased, and a consistency requirement for a plurality of reflective surfaces of the polygon mirror can be reduced.

The synchronization control apparatus for LiDAR provided in this embodiment of this application may be applied to LiDAR, a terminal, or the like. For example, the synchronization control apparatus for LiDAR may be a vehicle having a LiDAR synchronization control function, or another component having the LiDAR synchronization control function. The synchronization control apparatus for LiDAR includes but is not limited to: a vehicle-mounted terminal, a vehicle-mounted controller, a vehicle-mounted module, a vehicle-mounted module group, a vehicle-mounted component, a vehicle-mounted chip, a vehicle-mounted unit, vehicle-mounted LiDAR, and the like.

For example, the synchronization control apparatus for LiDAR may alternatively be another terminal with the LiDAR synchronization control function other than a vehicle, or may be disposed in another terminal with the LiDAR synchronization control function other than a vehicle, or may be disposed in a component of the terminal. The terminal may be another terminal device such as an intelligent transportation device, a smart home device, a robot, an uncrewed aerial vehicle, a surveying and mapping device, an augmented reality (augmented reality, AR) game device, a virtual reality (virtual reality, VR) game device, or a medical device. The synchronization control apparatus for LiDAR includes but is not limited to an intelligent terminal or a controller in the intelligent terminal, a chip, a sensor such as LiDAR, and other components.

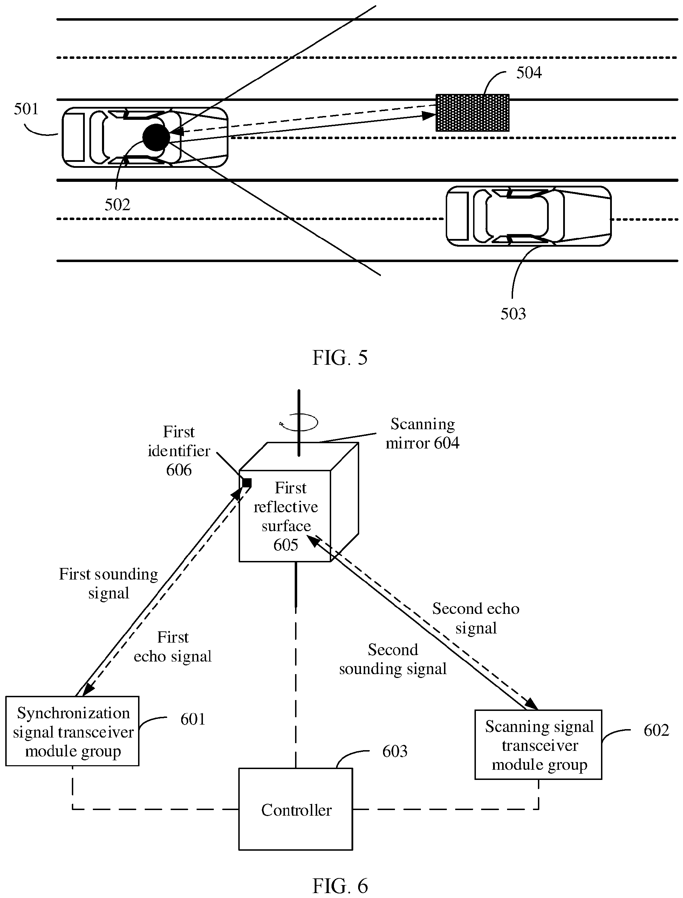

FIG. 5 is a schematic diagram of a possible application scenario to which a synchronization control apparatus for LiDAR is applicable according to an embodiment of this application. As shown in FIG. 5, the application scenario may be a scenario of automated driving, intelligent driving, or self driving, or the like. The scenario may include at least one ego vehicle 501. At least one piece of LiDAR 502 is installed in the ego vehicle. At least one synchronization control apparatus for LiDAR is installed in the LiDAR 502. The synchronization control apparatus for LiDAR is configured to obtain information such as a distance between an object (for example, another vehicle 503 or an obstacle 504 in the figure) and the ego vehicle 501 when the LiDAR 502 is used to scan the object in a surrounding environment. For example, the LiDAR 502 transmits a detecting signal, and then processes a received echo signal reflected by the obstacle 504 and the detecting signal, to obtain related information of the obstacle 504, for example, parameters such as a distance, a location, a height, a speed, a posture, and even a shape, so that the obstacle 504 can be detected, tracked, and identified.

It should be noted that, FIG. 5 only shows one ego vehicle, another vehicle, one piece of LiDAR, and one obstacle. It should be understood that a quantity of vehicles, a quantity of pieces of LiDAR, and a quantity of obstacles in an application scenario are not limited. The application scenario may include more vehicles, more pieces of LiDAR, more obstacles, and the like. This is not shown herein again.

In addition, an application scenario described in this embodiment of this application is intended to describe the technical solutions of this embodiment of this application more clearly, and does not constitute a limitation on the technical solutions provided in this embodiment of this application. A person skilled in the art may learn that as another similar or new application scenario emerges, the technical solutions provided in this embodiment of this application are also applicable to a similar technical problem.

The following specifically describes a synchronization control apparatus for LiDAR provided in this application.

FIG. 6 is a diagram of a structure of a synchronization control apparatus for LiDAR according to an embodiment of this application. As shown in FIG. 6, the apparatus may include: a synchronization signal transceiver module group 601, a scanning signal transceiver module group 602, a controller 603, and a scanning mirror 604.

The scanning mirror 604 includes a plurality of reflective surfaces, the plurality of reflective surfaces include corresponding identifiers, and the plurality of reflective surfaces include a first reflective surface 605.

The controller 603 is configured to control the synchronization signal transceiver module group 601 to transmit a first detecting signal.

The synchronization signal transceiver module group 601 is configured to receive a first echo signal.

The controller 603 is configured to determine that the first echo signal includes an echo signal obtained after the first detecting signal is reflected by a first identifier 606 corresponding to the first reflective surface 605, and control the scanning signal transceiver module group 602 to transmit a second detecting signal to the first reflective surface 605 in a first manner, where the first identifier 606 corresponds to the first manner.

In this embodiment of this application, the plurality of reflective surfaces of the scanning mirror 604 include the corresponding identifiers. The synchronization signal transceiver module group 601 transmits the first detecting signal and receives the first echo signal. When determining that the first echo signal includes the echo signal obtained after the first detecting signal is reflected by the first identifier 606 corresponding to the first reflective surface 605, the controller 603 controls the scanning signal transceiver module group 602 to transmit the second detecting signal to the first reflective surface 605, so that one time of space scanning using the first reflective surface 605 is completed, and one frame of point cloud corresponding to the first reflective surface 605 may be generated. The plurality of reflective surfaces of the scanning mirror 604 all include the corresponding identifiers. When determining an echo signal reflected by a corresponding identifier of each reflective surface, the controller 603 may control the scanning signal transceiver module group 602 to transmit the second detecting signal to each reflective surface, so that one time of space scanning using each reflective surface is completed, and one frame of point cloud corresponding to each reflective surface may be generated, thereby implementing scanning space synchronization between two or more adjacent frames without using hardware such as an angle encoder. In addition, a manner (namely, the first manner) of transmitting the second detecting signal corresponds to the first identifier 606, that is, corresponds to the first reflective surface 605, so that the scanning signal transceiver module group may transmit the second detecting signal to the first reflective surface 605 in a manner corresponding to the first reflective surface 605. Therefore, synchronization control of the first reflective surface 605 and a generation manner of a point cloud corresponding to the first reflective surface 605 is implemented. To be specific, a corresponding generation manner may be determined for one frame of point cloud, so that flexibility of LiDAR control is increased, a requirement for consistency between the first reflective surface and another reflective surface is reduced, costs are lower, and reliability is higher.

The scanning mirror 604 may include a plurality of reflective surfaces such as three, four, or six reflective surfaces. A quantity of reflective surfaces included in the scanning mirror 604 is not limited in this embodiment of this application. For example, the scanning mirror 604 may be a four-sided mirror, and the first reflective surface 605 may be any reflective surface of the four reflective surfaces. Each reflective surface may include one or more corresponding identifiers, that is, the first reflective surface 605 may include one or more corresponding identifiers, and the first identifier 606 may be any identifier of the first reflective surface 605. For example, if the first reflective surface 605 includes a corresponding identifier, when identifying that the first echo signal includes an echo signal reflected by the identifier, the controller 603 controls the scanning signal transceiver module group 602 to transmit the second detecting signal to the first reflective surface 605. The second detecting signal may be a segment of continuous detecting signals in a time domain, so that the second detecting signal is used as a group of detecting signals, to complete one time of space scanning using the first reflective surface 605, and generate one frame of point cloud. If the first reflective surface 605 includes a plurality of corresponding identifiers, when identifying that the first echo signal includes the echo signal reflected by each identifier of the first reflective surface, the controller 603 may control the scanning signal transceiver module group 602 to transmit the second detecting signal to the first reflective surface 605. The transmitted second detecting signal corresponding to each identifier may be a segment of continuous detecting signals in a time domain, and a plurality of segments of transmitted second detecting signals corresponding to a plurality of identifiers may be set as a group of detecting signals, so that, by using the group of detecting signals, one time of space scanning by using the first reflective surface 605 is completed, and one frame of point cloud is generated.

The synchronization signal transceiver module group 601 and the scanning signal transceiver module group 602 may be disposed independently, or may be disposed in an integrated manner. This is not specifically limited in this embodiment of this application. The scanning signal transceiver module group 602 may be any transceiver module group that can implement a space scanning function, and the synchronization signal transceiver module group may be any transceiver module group that can implement a synchronization function. It may be understood that the "scanning signal transceiver module group 602" and the "synchronization signal transceiver module group 601" are used to distinguish transceiver module groups that implement different functions. In this embodiment of this application, specific names of the transceiver module groups are not limited. A location of the scanning signal transceiver module group 602 and a location of the synchronization signal transceiver module group 601 may be set based on a conventional manner in the art, so that the scanning signal transceiver module group 602 and the synchronization signal transceiver module group 601 may cooperate with the scanning mirror 604 and other components to implement space scanning and synchronization functions. The synchronization control apparatus for LiDAR may include one or more synchronization signal transceiver module groups 601, and may also include one or more scanning signal transceiver module groups 602. In this embodiment of this application, a quantity of the synchronization signal transceiver module groups 601 and a quantity of the scanning signal transceiver module groups 602 are not limited.

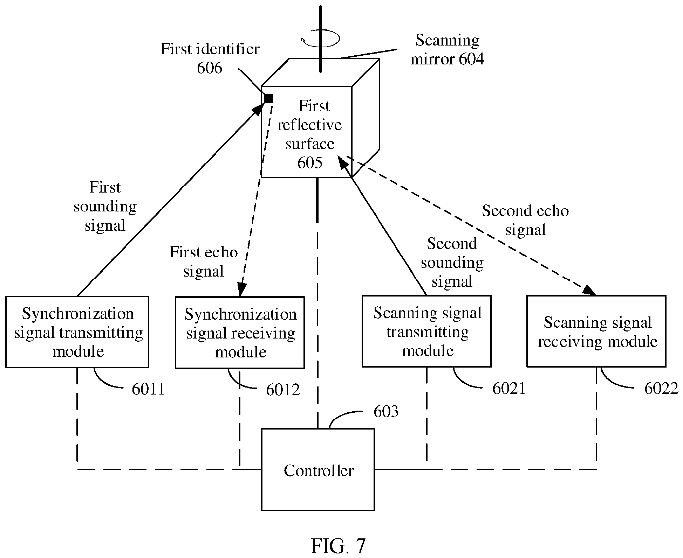

FIG. 7 is another schematic diagram of a structure of a synchronization control apparatus for LiDAR according to an embodiment of this application. As shown in FIG. 7, a scanning signal transceiver module group 602 in the apparatus may include a scanning signal transmitting module 6021 and a scanning signal receiving module 6022, and a synchronization signal transceiver module group 601 may include a synchronization signal transmitting module 6011 and a synchronization signal receiving module 6012. The synchronization signal transmitting module 6011 and the synchronization signal receiving module 6012 may be disposed independently, or may be disposed in an integrated manner. A controller 603 may control the synchronization signal transmitting module 6011 to transmit a first detecting signal, the first detecting signal may reach a scanning mirror 604, and a first echo signal reflected by the scanning mirror 604 may reach the synchronization signal receiving module 6012. The synchronization signal receiving module 6012 may receive the first echo signal, and the synchronization signal receiving module 6012 may send the received first echo signal to the controller 603, to determine whether the first echo signal includes an echo signal obtained after the first detecting signal is reflected by a first identifier 606 corresponding to a first reflective surface 605. When the first echo signal includes the echo signal reflected by the first identifier 606, the controller 603 controls the scanning signal transceiver module group 602 to transmit a second detecting signal to the first reflective surface 605 in a first manner, where the first identifier 606 corresponds to the first manner.

The scanning signal transmitting module 6021 and the scanning signal receiving module 6022 may be disposed independently, or may be disposed in an integrated manner. The controller 603 may control the scanning signal transmitting module 6021 to transmit the second detecting signal in the first manner. The second detecting signal may reach the first reflective surface 605 of the scanning mirror 604, and be reflected by the first reflective surface 605 to reach an external environment. A second echo signal reflected by the external environment is reflected by the first reflective surface 605 again to reach the scanning signal receiving module 6022. The scanning signal receiving module 6022 may send the received second echo signal to the controller 603. The controller 603 processes the second detecting signal and the second echo signal that are reflected by the first reflective surface 605, to generate one frame of point cloud.

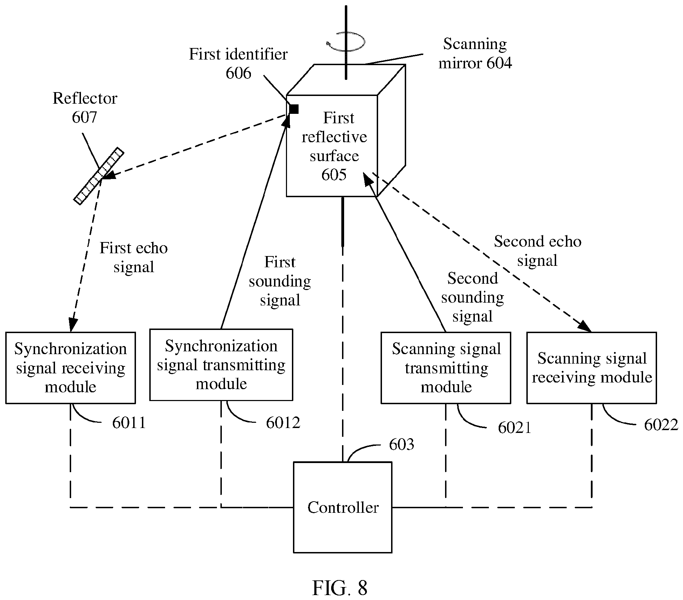

FIG. 8 is another schematic diagram of a structure of a synchronization control apparatus for LiDAR according to an embodiment of this application. As shown in FIG. 8, a scanning signal transceiver module group 602 in the apparatus may include a scanning signal transmitting module 6021 and a scanning signal receiving module 6022. A synchronization signal transceiver module group 601 may include a synchronization signal transmitting module 6011 and a synchronization signal receiving module 6012, and may further include a reflector 607. There may be one or more reflectors 607 (one reflector is shown in the figure). A first echo signal reflected by a scanning mirror 604 may reach the synchronization signal receiving module 6012 after being reflected by the reflector 607. In this way, a direction of the first echo signal is changed by using the reflector 607, a requirement for a location of the synchronization signal receiving module 6012 is reduced, and cost-effectiveness and applicability are improved. It may be understood that directions of a first detecting signal, a second detecting signal, and a second echo signal may be further changed by using the reflector 607, so that requirements on locations of the synchronization signal transmitting module 6011, the scanning signal transmitting module 6021, and the scanning signal receiving module 6022 are reduced, and cost-effectiveness and applicability are further improved.

In a possible implementation, a wavelength range of the first detecting signal is different from that of the second detecting signal. For example, the wavelength range of the first detecting signal may be 900 nm to 905 nm, and the wavelength range of the second detecting signal may be 1550 nm to 1555 nm. Therefore, mutual interference between the first detecting signal and the second detecting signal can be avoided, and reliability and accuracy of scanning space synchronization of two or more adjacent frames and space scanning performed by using a reflective surface are ensured. In some possible examples, the wavelength range of the first detecting signal and that of the second detecting signal may also partially overlap.

For example, the synchronization signal transmitting module 6011 (or the scanning signal transmitting module 6021) may include one or more laser light sources. The laser light source transmits a detecting signal (for example, pulse or continuous light) outwards, and a collimation mirror may be disposed in the apparatus based on light spot quality of the laser light source, to optimize a direction of the transmitted detecting signal. The synchronization signal receiving module 6012 (or the scanning signal receiving module 6022) may include one or more laser detectors, to detect an echo signal reflected by a polygon mirror or the like. The laser detector includes but is not limited to an avalanche photodiode (avalanche photodiode, APD), a single-photon avalanche diode (single-photon avalanche diode, SPAD), a silicon photomultiplier (silicon photomultiplier, SiPM), a photodiode, and the like. For example, a quantity of laser light sources may be same as a quantity of laser detectors. The laser light sources may be in a one-to-one correspondence with the laser detectors. Each laser detector is configured to receive an echo signal that is of a detecting signal sent by a corresponding laser light source and that is reflected by an object.

The controller 603 may be electrically connected to the synchronization signal transceiver module group 601, the scanning signal transceiver module group 602, and the scanning mirror 604. The controller 603 may control the synchronization signal transceiver module group 601 to transmit the first detecting signal, obtain the first echo signal received by the synchronization signal transceiver module group 601, further control the scanning signal transceiver module group 602 to transmit the second detecting signal to the first reflective surface 605, and obtain the second echo signal received by the scanning signal transceiver module group 602. The controller 603 may generate, by processing the second detecting signal and the second echo signal that are reflected by a same reflective surface within a specific time, a frame of point cloud corresponding to the reflective surface. For example, the controller 603 may control the synchronization signal transceiver module group 601 to transmit the first detecting signal when controlling the scanning signal transceiver module group 602 to complete transmission of the second detecting signal used to generate one frame of point cloud, or when controlling the scanning signal transceiver module group 602 to complete generation of one frame of point cloud.

Because an identifier included in each reflective surface may be different from a reflective surface at which the identifier is located, when the first detecting signal reaches the first reflective surface 605, the first echo signal reflected by the first identifier 606 of the first reflective surface 605 is different from a first echo signal reflected by a part other than the first identifier 606. The echo signal obtained after the first detecting signal is reflected by the first identifier 606 corresponding to the first reflective surface 605 may be determined based on this difference. For example, a feature of the first echo signal obtained after the first detecting signal is reflected by the first identifier 606 may be pre-determined. The controller 603 may match a feature of the first echo signal received by the synchronization signal transceiver module group 601 with the pre-determined feature. If the matching succeeds, that the first echo signal is reflected by the first identifier 606 may be determined.

When the controller 603 determines that the first echo signal is the echo signal obtained after the first detecting signal is reflected by the first identifier 606 corresponding to the first reflective surface 605, the controller 603 may control the scanning signal transceiver module group 602 to transmit the second detecting signal to the first reflective surface 605 in the first manner. A correspondence between the first identifier 606 and the first manner is related to at least one of a reflective surface at which the first identifier 606 is located and a location of the first identifier 606 on the reflective surface. For example, one reflective surface may correspond to one manner of transmitting the second detecting signal. When determining that the first echo signal is reflected by the first identifier 606, the controller 603 may control the scanning signal transceiver module group 602 to transmit the second detecting signal to the first reflective surface 605 in the first manner corresponding to the first reflective surface 605, so that synchronization between the first reflective surface 605 and a generation manner of a point cloud corresponding to the first reflective surface 605 is implemented. That is, a corresponding generation manner may be determined for one frame of point cloud corresponding to the first reflective surface 605. For another example, one reflective surface may be corresponding to a plurality of manners of transmitting the second detecting signal. The manners are in a one-to-one correspondence with preset locations on the first reflective surface 605. The preset locations may be locations of identifiers. For example, the plurality of preset locations may be set at an equal interval, and second detecting signals corresponding to the identifiers are used as a group of detecting signals to generate a frame of point cloud corresponding to the reflective surface. It may be understood that a second detecting signal corresponding to a specific identifier may be used to generate a part of the frame of point cloud. When determining that the first echo signal is reflected by the first identifier 606, the controller 603 may control the scanning signal transceiver module group 602 to transmit the second detecting signal in a manner corresponding to a location (for example, a preset location corresponding to the first identifier 606) of the first identifier 606 on the first reflective surface 605, so that synchronization between a location point of the first reflective surface 605 and a generation manner of a part of a point cloud corresponding to the location point is implemented. That is, a corresponding generation manner of a part of a frame of point cloud corresponding to the first reflective surface 605 can be determined, and precision of synchronization control is further improved.

In a possible implementation, the first identifier 606 is a start identifier of the first reflective surface 605, and a transmission moment of the second detecting signal is a start moment of frame data corresponding to the first reflective surface 605. The frame data may be a point cloud generated based on the second detecting signal and the corresponding second echo signal that are reflected by the first reflective surface 605 within a specific time. The start identifier is an identifier (for example, an identifier located at an edge of the reflective surface in a rotation direction) indicating that the first reflective surface 605 may be first scanned by the first detecting signal. That is, based on a rotation direction of the scanning mirror 604, when the scanning mirror 604 is rotated by a specific angle, the first detecting signal may reach the first reflective surface 605. In this case, the first detecting signal may first reach the first identifier 606 relative to another location at the first reflective surface 605. For example, the scanning mirror 604 shown in FIG. 7 rotates clockwise in a direction of an arrow, and the first identifier 606 is the start identifier. The controller 603 may identify the first identifier 606 based on the first echo signal reflected by the first identifier 606, and may use a moment at which the first identifier 606 is identified (that is, a start moment of the first reflective surface 605) as a start moment of the point cloud corresponding to the first reflective surface 605; or may set, based on an actual requirement, an interval between the start moment of the point cloud corresponding to the first reflective surface 605 and the moment at which the first identifier 606 is identified. In this way, start of a reflective surface is identified by using the start identifier, and the controller 603 may control, based on the moment at which the first identifier 606 is identified, the scanning signal transceiver module group 602 to work at the start moment of the point cloud corresponding to the first reflective surface 605. That is, the second detecting signal is transmitted to the first reflective surface 605 in the first manner corresponding to the first identifier 606, to perform space scanning, to obtain a complete frame of point cloud corresponding to the first reflective surface 605. Therefore, when the first identifier 606 is identified, reliability of performing space scanning by using the first reflective surface 605 is ensured, and costs are low, scanning space synchronization of two or more adjacent frames is implemented.

For example, the first manner may represent an attribute of the second detecting signal, and the attribute includes but is not limited to one or more of a signal type, a wavelength range, signal strength, a pulse interval, a transmission moment, transmission duration, a scanning signal transmitting module group that performs transmission work, related information of a laser configured for the scanning signal module group, and the like. For different identifiers, manners of transmitting the second detecting signal may be same or may be different. This is not limited herein.

For example, the first manner may be preset, or may be determined by the controller 603 in real time based on a newly generated point cloud. For example, a corresponding scanning signal transmitting module group (for example, a laser and a detector) may be preset based on a processing roughness, a surface type, a plating layer, a reflectivity, and the like of the first reflective surface 605 and based on a requirement of space scanning, to reduce a requirement for consistency between the first reflective surface 605 and another reflective surface, thereby reducing costs. For another example, when the controller 603 determines, by using the point cloud, that the scanning space includes a target object (for example, the obstacle in FIG. 5) based on a frame of point cloud generated based on a second echo signal and a second detecting signal that are reflected by a previous reflective surface of the first reflective surface 605 within a specific time, the controller 603 may determine that signal strength of a second detecting signal corresponding to a next frame of point cloud needs to be increased, that is, determine a transmission manner of the second detecting signal corresponding to the first reflective surface 605 (or the first identifier), to obtain information about the target object with higher resolution. For another example, when the controller 603 determines, by using a frame of point cloud corresponding to a previous reflective surface of the first reflective surface 605, that scanning space includes an object that restricts a detection distance, such as fog or haze, the controller 603 may determine that a wavelength range used to generate a second detecting signal corresponding to a next frame of point cloud needs to be increased, that is, determine a transmission manner of the second detecting signal corresponding to the first reflective surface 605 (or the first identifier), to increase the detection distance and obtain a more clear and stable point cloud. In this way, when the scanning mirror 604 rotates to the first reflective surface 605 towards the synchronization signal transceiver module group 601, and the controller 603 determines that the first echo signal includes the echo signal reflected by the first identifier 606 of the first reflective surface 605, the scanning signal transceiver module group 602 is controlled to send the second detecting signal to the first reflective surface 605 in the foregoing determined transmission manner of the second detecting signal corresponding to the first reflective surface 605, to generate the point cloud corresponding to the first reflective surface 605.

In a possible implementation, a second identifier 608 is further disposed on the first reflective surface 605, and the first identifier 606 and the second identifier 608 are different identifiers. The controller 603 may further control the scanning mirror 604 to rotate based on the echo signal obtained after the first detecting signal is reflected by the first identifier 606, an echo signal obtained after the first detecting signal is reflected by the second identifier 608, and preset rotation information.

In a process of rotating the scanning mirror 604, rotation information (for example, a rotation speed or a direction) of the scanning mirror 604 may fluctuate. That is, actual rotation information of the scanning mirror 604 is different from preset rotation information of space scanning. As a result, an actual location at which the second detecting signal reaches the first reflective surface 605 may deviate from a preset location. As the scanning mirror 604 rotates, deviation may gradually increase with time in a time period in which a frame of point cloud corresponding to the first reflective surface 605 is obtained, that is, a location deviation of a later half of the time period may be greater than a location deviation of a first half of the time period. In this way, the rotation information of the scanning mirror 604 may be corrected by using the first identifier 606 and the second identifier 608 on the first reflective surface 605, to implement precise synchronization control of rotation of the scanning mirror 604 in a space scanning process.

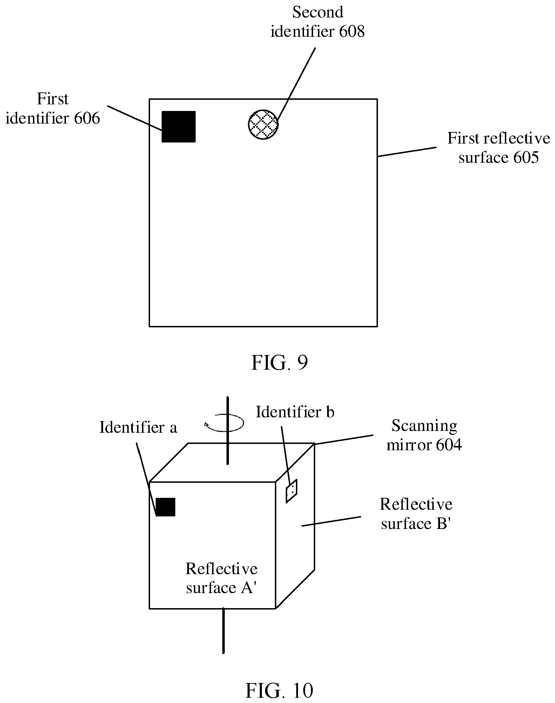

FIG. 9 is a schematic diagram of a first reflective surface 605 according to an embodiment of this application. As shown in FIG. 9, the first reflective surface 605 includes a first identifier 606, and may further include at least one (one is shown in the figure) second identifier 608. The first identifier 606 and the second identifier 608 are different identifiers. There is a specific interval between locations of the first identifier 606 and the second identifier 608 in a horizontal direction, and there is a correspondence between locations of the first identifier 606 and the second identifier 608 and angle information of a scanning mirror 604. It is assumed that a rotation direction of the scanning mirror 604 is clockwise (from a top-down field of view). A controller 603 may determine actual rotation information of the scanning mirror 604, for example, an actual rotation speed, based on an echo signal obtained after a first detecting signal is reflected by the first identifier 606 and an echo signal obtained after the first detecting signal is reflected by the second identifier 608. For example, the controller 603 may control a synchronization signal transceiver module group 601 to continuously send the first detecting signal, determine, by identifying the echo signal obtained after the first detecting signal is reflected by the first identifier 606, a first angle of a scanning mirror 604 corresponding to the first identifier 606 and a first moment for identifying the first identifier 606, and determine, by identifying the echo signal obtained after the first detecting signal is reflected by the second identifier 608, a second angle of a scanning mirror 604 corresponding to the second identifier 608 and a second moment for identifying the first identifier 606. The actual rotation speed of the scanning mirror 604 is determined based on the first angle, the second angle, the first identifier 606, and the second identifier 608, and the actual rotation speed is compared with a corresponding preset rotation speed between the first angle and the second angle for space scanning. When a difference between the actual rotation speed and the preset rotation speed is greater than a threshold, the rotation speed of the scanning mirror 604 is adjusted to the preset rotation speed, to adjust a real-time rotation speed of the scanning mirror 604, and implement precise synchronization control of rotation of the scanning mirror 604 in a space scanning process.

In a possible implementation, different reflective surfaces have different identifiers. In this way, different reflective surfaces may be distinguished by using different identifiers. When determining that a first echo signal includes an echo signal obtained after the first detecting signal is reflected by a corresponding identifier, the controller may accurately locate, by using the identifier, a reflective surface at which the identifier is located. In addition to implementing scanning space synchronization of two or more adjacent frames, a point cloud generation manner corresponding to each reflective surface may be separately controlled, to implement differentiated control, that is, differentiated synchronization control of different frames of point cloud is implemented, so that flexibility of synchronization control is further improved, a consistency requirement on each reflective surface of the scanning mirror 604 is reduced, and costs are reduced.

For example, different identifiers may be separately set on at least two reflective surfaces. For example, if the scanning mirror 604 includes four reflective surfaces, identifiers may be disposed on all the four reflective surfaces. The identifiers are different from reflective surfaces at which the identifiers are located, and different identifiers are disposed on different reflective surfaces. Alternatively, at least one reflective surface in a plurality of reflective surfaces may be used as an identifier, that is, no additional identifier needs to be disposed on the at least one reflective surface. For example, if the scanning mirror 604 includes four reflective surfaces, identifiers may be separately disposed on three of the reflective surfaces, different identifiers are disposed on different reflective surfaces, and the other reflective surface is used as an identifier. Another setting may be performed. An identifier setting manner is not limited in this embodiment of this application, provided that a reflective surface corresponding to the identifier can be determined by using the identifier.

In a possible implementation, the identifiers may be disposed at an edge location of the reflective surfaces. By identifying an echo signal reflected by the identifier, whether a reflective surface rotates to a reflective surface where the identifier is located is determined in a timely and accurate manner, so that impact of the identifier on space scanning may be reduced or avoided. For example, as shown in FIG. 6, based on the rotation direction of the scanning mirror 604, it can be learned that a left edge of the first reflective surface 605 may be first scanned by the first detecting signal. Generally, after the first reflective surface 605 continues to rotate for a specific angle, the controller 603 controls a scanning signal transceiver module group to transmit a second detecting signal to the first reflective surface 605 to perform space scanning, and the first identifier 606 is disposed on the left edge of the first reflective surface 605. That the reflective surface rotates to the first reflective surface 605 may be determined in time and accurately by identifying an echo signal reflected by the first identifier 606, so that impact of the first identifier 606 on space scanning performed by using the first reflective surface 605 is reduced or avoided.

For example, FIG. 10 is a schematic diagram of a scanning mirror 604 according to an embodiment of this application. As shown in FIG. 10, the scanning mirror 604 may be a four-sided mirror. An identifier a is disposed on a reflective surface A', an identifier b is disposed on a reflective surface B', the identifier a is different from the identifier b, and manners of transmitting a second detecting signal corresponding to the identifier a and the identifier b are different.

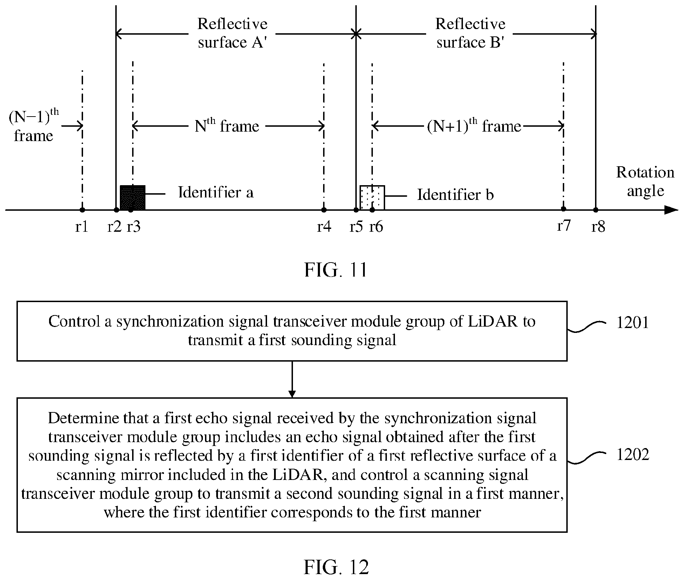

FIG. 11 is a schematic diagram of implementing synchronization control based on the scanning mirror 604 in FIG. 10 according to an embodiment of this application. As shown in FIG. 11, after generating an (N-1)^{th} frame (N is an integer greater than 1) of point cloud, that is, when the scanning mirror 604 rotates to an angle r1, a controller 603 may control a synchronization signal transceiver module group 601 to periodically and continuously transmit a first detecting signal, and the synchronization signal transceiver module group 601 receives a corresponding first echo signal. When the scanning mirror 604 rotates to an angle between r1 and r3 (not reaching r3), where an angle r2 corresponds to a start angle of the reflective surface A', the controller 603 processes the first echo signal reflected by the scanning mirror 604. In this case, an echo signal obtained after the first detecting signal is reflected by an identifier (including the identifier a, the identifier b, and the like) cannot be detected. When the scanning mirror 604 rotates to the angle r3, the first detecting signal reaches the identifier a. The controller 603 may determine an echo signal that is reflected by the identifier a and that is received by the synchronization signal transceiver module group 601. In this case, the controller 603 may control a scanning signal transceiver module group 602 to transmit a second detecting signal to the reflective surface A' in a manner corresponding to the identifier a. Correspondingly, a moment at which the scanning mirror 604 rotates to the angle r3 is a start moment of an N^{th} frame of point cloud. In this case, the controller 603 may further control the synchronization signal transceiver module group 601 to stop working. The controller 603 may determine, based on rotation speed of the scanning mirror 604, a rotation angle of the scanning mirror 604. When the controller 603 determines that the scanning mirror 604 rotates to an angle r4, the controller 603 controls the scanning signal transceiver module group 602 to stop transmitting the second detecting signal. This moment is an end moment of the N^{th} frame of point cloud, space scanning by using the reflective surface A' is completed at this moment, and a corresponding N^{th} frame of point cloud is generated. In this case, the controller 603 may control the synchronization signal transceiver module group 601 to transmit the first detecting signal again, and the synchronization signal transceiver module group 601 receives the corresponding first echo signal. When the scanning mirror 604 rotates to an angle between r4 and r6 (not reaching r6), where an angle r5 corresponds to a start angle of the reflective surface B', the controller 603 processes the first echo signal reflected by the scanning mirror 604. In this case, the controller 603 cannot detect an echo signal obtained after the first detecting signal is reflected by the identifier (including the identifier a, the identifier b, and the like). When the scanning mirror 604 rotates to an angle r6, the first detecting signal reaches the identifier b. The controller 603 may determine an echo signal that is reflected by the identifier b and that is received by the synchronization signal transceiver module group 601. In this case, the controller 603 may control the scanning signal transceiver module group 602 to transmit the second detecting signal to the reflective surface B' in a manner corresponding to the identifier b. Correspondingly, a moment at which the scanning mirror 604 rotates to the angle r6 is a start moment of an (N+1)^{th} frame of point cloud. In this case, the controller 603 may further control the synchronization signal transceiver module group 601 to stop working. When the scanning mirror 604 rotates to an angle r7, the controller 603 controls the scanning signal transceiver module group 602 to stop transmitting the second detecting signal. This moment is an end moment of the (N+1)^{th} frame of point cloud, space scanning by using the reflective surface B' is completed at this moment, and a corresponding (N+1)^{th} frame of point cloud is generated. In this way, different reflective surfaces are distinguished by using identifiers corresponding to the reflective surfaces, and manners of transmitting the second detecting signal corresponding to different identifiers may be different. When identifying an identifier, that space scanning is to be started on a reflective surface at which the identifier is located may be determined, and the scanning signal transceiver module group 602 may be controlled, based on a manner corresponding to the identifier, to transmit the second detecting signal to the reflective surface at which the identifier is located, perform space scanning, and generate a frame of point cloud, so that differentiated control of different reflective surfaces and point cloud generation manners corresponding to the reflective surfaces is implemented.

A manner in which the controller 603 controls the synchronization signal transceiver module group 601 to work may be determined based on a number of identifiers set on the reflective surface. For example, if only one identifier is disposed on one reflective surface, the controller 603 may control the synchronization signal transceiver module group 601 to stop working when identifying the identifier. If a plurality of identifiers are disposed on a reflective surface, when identifying a start identifier and an intermediate identifier of the reflective surface, the controller 603 may control a synchronization signal transceiver module to continue working until a last identifier (end identifier) in the reflective surface is identified. In this way, when numbers of identifiers of two reflective surfaces are different, the reflective surface may be determined based on a number of identified identifiers of the reflective surface. Further, more information such as a rotation angle and a rotation speed of the scanning mirror 604 may be obtained by using a plurality of identifiers on a reflective surface, to further improve synchronization precision. A start identifier, middle identifier, and end identifier on a same reflective surface can be distinguished and defined based on a specific product design.

In a possible implementation, the controller 603 may determine, based on a feature set of the first echo signal, whether the first echo signal includes the echo signal obtained after the first detecting signal is reflected by the first identifier 606 corresponding to the first reflective surface 605. A condition for determining that the first echo signal includes the echo signal obtained after the first detecting signal is reflected by the first identifier 606 corresponding to the first reflective surface 605 may be: A first feature set of the first echo signal matches a preset feature set, and there is a correspondence between the preset feature set and the first identifier 606. For example, a preset feature set of echo signals obtained after the first detecting signal is reflected by each identifier of different reflective surface surfaces may be extracted in advance, so that a preset feature set corresponding to each identifier may be established. In a synchronization process, the controller 603 may extract the first feature set of the first echo signal. When the first feature set matches the preset feature set corresponding to the first identifier 606, that the first echo signal includes the echo signal obtained after the first detecting signal is reflected by the first identifier 606 is determined, where the first detecting signal transmitted in an establishing phrase of the preset feature set corresponding to the identifiers is the same as the first detecting signal in a synchronization process. In this way, an identifier reflecting the first echo signal may be identified based on the first feature set of the first echo signal, so that a reflective surface at which the identifier is located is determined.

For example, the first feature set (or the preset feature set) may include any one or more of a waveform feature of the first echo signal, a pattern feature corresponding to the first echo signal, or a time feature corresponding to the first echo signal. In this way, a corresponding identifier may be identified based on a difference in a waveform feature, a pattern feature, a time feature, and the like of the echo signal obtained after the first detecting signal is reflected by different identifiers.

In a possible implementation, the identifier is disposed in any one or more of the following manners: coating, etching, film applying, material changing, or shape changing performed on the reflective surface. For example, coating may be performed on an area of a reflective surface, and the coating is used as an identifier of the reflective surface; or etching processing may be performed on an area of a reflective surface, texture of the reflective surface is changed, and the texture is used as an identifier of the reflective surface; or film applying processing may be performed on an area of a reflective surface, and the film is used as an identifier of the reflective surface; or a material of an area of a reflective surface may be changed, so that the area is different from the reflective surface, and the area is used as an identifier of the reflective surface; or a shape of an area of a reflective surface may be changed, for example, a bump or a depression is set, so that the area is different from another part of the reflective surface, and the area is used as an identifier of the reflective surface. The reflective surface is simply processed in the foregoing a plurality of manners, and the identifier is disposed, so that the echo signal obtained after the first detecting signal is reflected by the identifier has a feature such as a special waveform feature, a pattern feature, or a time feature, thereby distinguishing the identifier from the reflective surface at which the identifier is located. Further, different reflective surfaces may be processed differently in the foregoing a plurality of manners, to set different identifiers on the different reflective surfaces, and a cost of processing is low. After the foregoing processing is performed on the reflective surface, there is a difference between different identifiers disposed on different reflective surfaces, and between an identifier disposed on each reflective surface and the reflective surface. Therefore, there is a difference in features such as a waveform feature, a pattern feature, or a time feature between echo signals obtained after the first detecting signal is reflected by different identifiers, and between an echo signal reflected by the identifier and an echo signal reflected by the reflective surface at which the identifier is located. Therefore, the difference can be used to identify different identifiers.

For example, the waveform feature may include but is not limited to any one or more of an amplitude, a wavelength (or frequency), a phase, and the like. For example, different materials correspond to different reflectivity. A material of the first identifier 606 may be different from a material (or another identifier) of the first reflective surface 605. After the first detecting signal is reflected by the first identifier 606 and after the first detecting signal is reflected by a part that is not the first identifier 606 (or another identifier) and that is of the first reflective surface 605, amplitudes of echo signals are different. In this way, an amplitude of the first echo signal is matched with an amplitude of an echo signal corresponding to a preset first identifier 606, to determine the first identifier 606. For another example, different materials have different transmittances for different wavelengths. A material of the first identifier 606 may be different from a material (or another identifier) of the first reflective surface 605. After a wide-spectrum light source (that is, a light source including a plurality of bands) is reflected by the first identifier 606, a specific band of the wide-spectrum light source is absorbed. In this way, the synchronization signal transceiver module group 601 transmits a first detecting signal of the wide-spectrum light source, and a center wavelength of a received first echo signal may be matched with a center wavelength of the echo signal corresponding to the preset first identifier 606, to determine the first identifier 606. For another example, for different materials, after the first detecting signal is reflected by the different materials, a phase changes differently. A material of the first identifier 606 may be different from a material (or another identifier) of the first reflective surface 605. The received first echo signal is compared with the first detecting signal to determine an actual phase change, and the actual phase change is matched with a phase change corresponding to the preset first identifier 606, to determine the first identifier 606.

The pattern feature may include any one or more of a pattern, a shape, a quantity, and the like of a light spot formed by the first echo signal, for example, a specific pattern or texture is disposed on the first reflective surface 605 in a manner such as film applying or etching, and the pattern or texture is different from another identifier. After the first detecting signal is reflected by the first identifier 606 and after the first detecting signal is reflected by another identifier, light spots formed by echo signals are different, a light spot pattern formed by the received first echo signal is matched with a light spot pattern formed by the echo signal corresponding to the first identifier 606, to determine the first identifier 606. For another example, a first identifier 606 of a specific shape (for example, may be a circle, a square, or a triangle) may be disposed on the first reflective surface 605 by applying a film, coating, or the like, and the shape is different from another identifier. After the first detecting signal is reflected by the first identifier 606 and after the first detecting signal is reflected by another identifier, shapes of light spots formed by echo signals are different. A shape of a light spot formed by the received first echo signal is matched with a shape of a light spot formed by the echo signal corresponding to the first identifier 606, to determine the first identifier 606. For another example, a pattern sequence in a vertical direction may be disposed on the first reflective surface 605 as the first identifier 606 by applying a film, etching, or the like. Different patterns in the sequence are arranged at a specific interval, and patterns in pattern sequences corresponding to different identifiers are arranged at a same interval, and quantities of the patterns are different. The first detecting signal transmitted by the synchronization signal transceiver module includes, in the vertical direction, a plurality of laser beams arranged at a specific interval, and different laser beams may reach different interval locations. In this way, after the first detecting signal is reflected by the first identifier 606 and after the first detecting signal is reflected by another identifier, quantities of light spots formed by echo signals are different. A quantity of light spots formed by the received first echo signal is matched with a quantity of light spots formed by the echo signal corresponding to the first identifier 606, to determine the first identifier 606.

The time feature may include a time interval between a plurality of echo signals, for example, a pattern sequence may be disposed on the first reflective surface 605 as the first identifier 606 by applying a film, etching, or the like. Different identifiers correspond to pattern sequences with different arrangement intervals of patterns, and the pattern sequence includes at least two patterns. A time interval corresponding to the identifier may be determined based on time of an echo signal corresponding to two adjacent patterns in a same pattern sequence. In this way, after the first detecting signal is reflected by the first identifier 606 and after the first detecting signal is reflected by another identifier, time intervals corresponding to different identifiers are different. A time interval determined by a first echo signal reflected by the two adjacent patterns is matched with a time interval corresponding to the first identifier 606, to determine the first identifier 606.

Based on a same inventive concept as the foregoing apparatus embodiment, an embodiment of this application further provides a synchronization control method for LiDAR. The method may be applied to the synchronization control apparatus for LiDAR in any one of the foregoing embodiments.

FIG. 12 is a flowchart of a synchronization control method for LiDAR according to an embodiment of this application. The method may be performed by the controller 603 in FIG. 6. As shown in FIG. 12, the method may include the following steps.

Step 1201: Control a synchronization signal transceiver module group of LiDAR to transmit a first detecting signal.

Step 1202: Determine that a first echo signal received by the synchronization signal transceiver module group includes an echo signal obtained after the first detecting signal is reflected by a first identifier of a first reflective surface of a scanning mirror included in the LiDAR, and control a scanning signal transceiver module group to transmit a second detecting signal to the first reflective surface in a first manner, where the first identifier corresponds to the first manner.

In this embodiment of this application, the controller controls the synchronization signal transceiver module group of the LiDAR to transmit the first detecting signal, and when determining that the first echo signal includes the echo signal obtained after the first detecting signal is reflected by the first identifier corresponding to the first reflective surface, controls the scanning signal transceiver module group to transmit the second detecting signal, so that one time of space scanning by using the first reflective surface is completed, and a frame of point cloud corresponding to the first reflective surface may be generated. A plurality of reflective surfaces of the scanning mirror all include corresponding identifiers. When determining an echo signal reflected by a corresponding identifier of each reflective surface, the controller may control the scanning signal transceiver module group to transmit the second detecting signal to each reflective surface, so that one time of space scanning by using each reflective surface is completed, and one frame of point cloud corresponding to each reflective surface may be generated, thereby implementing scanning space synchronization between two or more adjacent frames without using hardware such as an angle encoder. In addition, a manner (namely, the first manner) of transmitting the second detecting signal corresponds to the first identifier, that is, corresponds to the first reflective surface, so that the scanning signal transceiver module group may transmit the second detecting signal to the first reflective surface in a manner corresponding to the first reflective surface. Therefore, synchronization control of the first reflective surface and a generation manner of a point cloud corresponding to the first reflective surface is implemented. To be specific, a corresponding generation manner may be determined for one frame of point cloud, so that flexibility of LiDAR control is increased, a requirement for consistency between the first reflective surface and another reflective surface is reduced, costs are lower, and reliability is higher.

In a possible implementation, identifiers of different reflective surfaces of the scanning mirror included in the LiDAR are different.

In a possible implementation, a first feature set of the first echo signal matches a preset feature set, and there is a correspondence between the preset feature set and the first identifier.

In a possible implementation, the first identifier is a start identifier of the first reflective surface, and a transmission moment of the second detecting signal is a start moment of frame data corresponding to the first reflective surface.

In a possible implementation, a second identifier is further disposed on the first reflective surface, and the method further includes: controlling the scanning mirror to rotate based on the echo signal obtained after the first detecting signal is reflected by the first identifier, an echo signal obtained after the first detecting signal is reflected by the second identifier, and preset rotation information.

In a possible implementation, the first identifier is disposed at an edge location of the first reflective surface.

In a possible implementation, a wavelength range of the first detecting signal is different from that of the second detecting signal.

In a possible implementation, the first feature set includes any one or more of a waveform feature of the first echo signal, a pattern feature corresponding to the first echo signal, or a time feature corresponding to the first echo signal.

In a possible implementation, the first identifier is disposed in any one or more of the following manners: coating, etching, film applying, material changing, or shape changing performed on the first reflective surface.

In this embodiment of this application, for specific descriptions and technical effects of the synchronization control method for LiDAR and various possible implementations of the method, refer to the related descriptions of the synchronization control apparatus for LiDAR. Details are not described herein again.

An embodiment of this application provides a synchronization control apparatus for LiDAR, and the apparatus includes at least one processor and a memory that is configured to store instructions that may be executed by the processor. When the at least one processor is configured to execute the instructions, the synchronization control method for LiDAR is implemented.

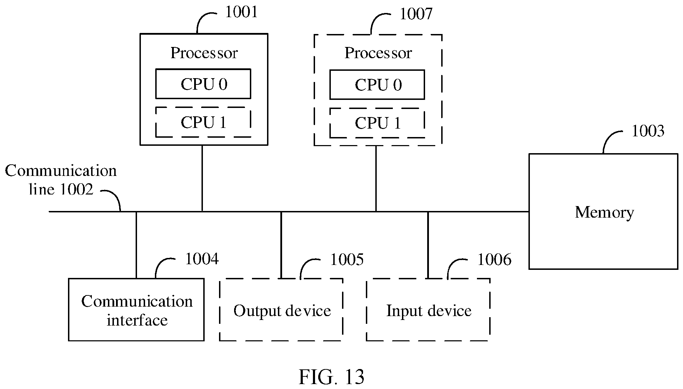

FIG. 13 is another schematic diagram of a structure of a synchronization control apparatus for LiDAR according to an embodiment of this application. As shown in FIG. 13, the synchronization control apparatus for LiDAR may include at least one processor 1001 and at least one communications interface 1004. Optionally, the apparatus may further include a communication line 1002 and a memory 1003.

The processor 1001 may be a general-purpose central processing unit (central processing unit, CPU), a microprocessor, an application-specific integrated circuit (application-specific integrated circuit, ASIC), or one or more integrated circuits configured to control program execution of the solutions in this application. The processor 1001 may be configured to implement the controller 603 in this embodiment of this application.

The communication line 1002 may include a path for transmitting information between the foregoing components.

The communications interface 1004 uses any apparatus such as a transceiver, and is configured to communicate with another device or a communication network such as an Ethernet, a radio access network (radio access network, RAN), or a wireless local area network (wireless local area network, WLAN).

The memory 1003 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor by using the communication line 1002. The memory may alternatively be integrated with the processor. The memory provided in this embodiment of this application may be usually non-volatile. The memory 1003 is configured to store computer-executable instructions for executing the solutions of this application, and the processor 1001 controls execution. The processor 1001 is configured to execute the computer-executable instructions stored in the memory 1003, to implement the synchronization control method for LiDAR provided in the foregoing embodiment of this application.

Optionally, the computer-executable instructions in this embodiment of this application may also be referred to as application program code. This is not specifically limited in this embodiment of this application.

In a specific implementation, in an embodiment, the processor 1001 may include one or more CPUs, for example, a CPU 0 and a CPU 1 in FIG. 13.

In a specific implementation, in an embodiment, the synchronization control apparatus for LiDAR may include a plurality of processors, for example, the processor 1001 and a processor 1007 in FIG. 13. Each of these processors may be a single-core (single-CPU) processor or a multicore (multi-CPU) processor. The processor herein may be one or more devices, circuits, and/or processing cores configured to process data (for example, computer program instructions).

In a specific implementation, in an embodiment, the synchronization control apparatus for LiDAR may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive input of a user in a plurality of manners. For example, the input device 1006 may be a mouse, a keyboard, a touchscreen device, or a sensing device.

An embodiment of this application further provides LiDAR. The LiDAR includes at least one synchronization control apparatus for LiDAR mentioned in the foregoing embodiments of this application. For example, the synchronization control apparatus for LiDAR may be applied to an advanced driver assistance system (advanced driver assistance system, ADAS) and an automated driving system (automated driving system, ADS) of a vehicle, may also be used for a plurality of driving functions (such as adaptive cruise control (adaptive cruise control, ACC) and autonomous emergency braking (advanced emergency braking, AEB)), and the like, and may be further applied to scenarios such as device to device communication (device to device communication, D2D), vehicle to everything (vehicle to everything, V2X) communication, vehicle to vehicle (vehicle to vehicle, V2V) communication, long term evolution-vehicle (long term evolution-vehicle, LTE-V) communication and long term evolution-machine (long term evolution-machine, LTE-M) communication.

An embodiment of this application further provides a terminal. The terminal includes at least one synchronization control apparatus for LiDAR mentioned in the foregoing embodiments of this application. The terminal may be another terminal device such as an intelligent transportation device, a smart home device, a robot, an uncrewed aerial vehicle, a surveying and mapping device, an augmented reality (augmented reality, AR) game device, a virtual reality (virtual reality, VR) game device, or a medical device. The synchronization control apparatus for LiDAR includes but is not limited to an intelligent terminal or a controller in the intelligent terminal, a chip, a sensor such as LiDAR, and other components.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium carrying the computer-readable code. When the computer-readable code runs in a processor of an electronic device, the processor in the electronic device performs the foregoing method.

The computer-readable storage medium may be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing devices. More specific examples (non-exhaustive list) of the computer-readable storage medium include: portable computer disks, hard disks, random access memory (random access memory, RAM), read-only memory (read-only memory, ROM), erasable programmable read-only memory (electrically programmable read-only-memory, EPROM, or flash memory), static random access memory (static random-access memory, SRAM), portable compact disc read-only memory (compact disc read-only memory, CD-ROM), digital versatile disc (digital video disc, DVD), memory stick, floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium or to an external computer or external storage device via a network, such as an Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be an assembly instruction, an instruction set architecture (instruction set architecture, ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a C language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer through any type of network, including a local area network (local area network, LAN) or a wide area network (wide area network, WAN), or may be connected to an external computer (for example, through the Internet by using an Internet service provider). In some embodiments, an electronic circuit, for example, a programmable logic circuit, a field programmable gate array (field-programmable gate array, FPGA), or a programmable logic array (programmable logic array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two continuous blocks may actually be executed substantially in parallel, and may sometimes be executed in a reverse order, depending on a function involved.

It should also be noted that each block in the block diagram and/or the flowchart, and a combination of blocks in the block diagram and/or the flowchart may be implemented by hardware (for example, a circuit or an application-specific integrated circuit (application specific integrated circuit, ASIC)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, not exhaustive, and not limited to the foregoing disclosed embodiments. Many modifications and variations are apparent to a person of ordinary skill in the art without departing from the scope and spirit of the described embodiments. Selection of terms used in this specification is intended to best explain embodiment principles, actual application or improvements to technologies in the market, or to enable another person of ordinary skill in the art to understand the embodiments disclosed in this specification.

## Claims

1. A synchronization control apparatus for LiDAR, comprising a synchronization signal transceiver module group, a scanning signal transceiver module group, a controller, and a scanning mirror, wherein
the scanning mirror comprises a plurality of reflective surfaces, the plurality of reflective surfaces comprise corresponding identifiers, and the plurality of reflective surfaces comprise a first reflective surface;
the controller is configured to control the synchronization signal transceiver module group to transmit a first detecting signal;
the synchronization signal transceiver module group is configured to receive a first echo signal; and
the controller is configured to determine that the first echo signal comprises an echo signal obtained after the first detecting signal is reflected by a first identifier corresponding to the first reflective surface, and control the scanning signal transceiver module group to transmit a second detecting signal to the first reflective surface in a first manner, wherein the first identifier corresponds to the first manner.

2. The apparatus according to claim 1, wherein different reflective surfaces have different identifiers.

3. The apparatus according to claim 1 or 2, wherein a first feature set of the first echo signal matches a preset feature set; and
there is a correspondence between the preset feature set and the first identifier.

4. The apparatus according to any one of claims 1 to 3, wherein the first identifier is a start identifier of the first reflective surface, and a transmission moment of the second detecting signal is a start moment of frame data corresponding to the first reflective surface.

5. The apparatus according to any one of claims 1 to 4, wherein the first reflective surface is further provided with a second identifier; and
the controller is further configured to:
control the scanning mirror to rotate based on the echo signal obtained after the first detecting signal is reflected by the first identifier, an echo signal obtained after the first detecting signal is reflected by the second identifier, and preset rotation information.

6. The apparatus according to any one of claims 1 to 5, wherein the first identifier is disposed at an edge location of the first reflective surface.

7. The apparatus according to any one of claims 1 to 6, wherein a wavelength range of the first detecting signal is different from that of the second detecting signal.

8. The apparatus according to any one of claims 3 to 7, wherein the first feature set comprises any one or more of a waveform feature of the first echo signal, a pattern feature corresponding to the first echo signal, or a time feature corresponding to the first echo signal.

9. The apparatus according to any one of claims 1 to 8, wherein the first identifier is disposed in any one or more of the following manners: coating, etching, film applying, material changing, and shape changing performed on the first reflective surface.

10. A synchronization control method for LiDAR, wherein the method comprises:
controlling a synchronization signal transceiver module group of LiDAR to transmit a first detecting signal; and
determining that a first echo signal received by the synchronization signal transceiver module group comprises an echo signal obtained after the first detecting signal is reflected by a first identifier of a first reflective surface of a scanning mirror comprised in the LiDAR, and controlling a scanning signal transceiver module group to transmit a second detecting signal to the first reflective surface in a first manner, wherein the first identifier corresponds to the first manner.

11. The method according to claim 10, wherein identifiers of different reflective surfaces of the scanning mirror comprised in the LiDAR are different.

12. The method according to claim 10 or 11, wherein a first feature set of the first echo signal matches a preset feature set; and
there is a correspondence between the preset feature set and the first identifier.

13. The method according to any one of claims 10 to 12, wherein the first identifier is a start identifier of the first reflective surface, and a transmission moment of the second detecting signal is a start moment of frame data corresponding to the first reflective surface.

14. The method according to any one of claims 10 to 13, wherein the first reflective surface is further provided with a second identifier; and
the method further comprises: controlling the scanning mirror to rotate based on the echo signal obtained after the first detecting signal is reflected by the first identifier, an echo signal obtained after the first detecting signal is reflected by the second identifier, and preset rotation information.

15. The method according to any one of claims 10 to 14, wherein the first identifier is disposed at an edge location of the first reflective surface.

16. The method according to any one of claims 10 to 15, wherein a wavelength range of the first detecting signal is different from that of the second detecting signal.

17. The method according to any one of claims 12 to 16, wherein the first feature set comprises any one or more of a waveform feature of the first echo signal, a pattern feature corresponding to the first echo signal, or a time feature corresponding to the first echo signal.

18. The method according to any one of claims 10 to 17, wherein the first identifier is disposed in any one or more of the following manners: coating, etching, film applying, material changing, and shape changing performed on the first reflective surface.

19. LiDAR, wherein the LiDAR comprises the synchronization control apparatus for LiDAR according to any one of claims 1 to 9.

20. A terminal, wherein the terminal comprises the synchronization control apparatus for LiDAR according to any one of claims 1 to 9.

21. A synchronization control apparatus for LiDAR, comprising:
at least one processor; and
a memory, configured to store instructions that may be executed by the processor wherein
when the at least one processor is configured to execute the instructions, the method according to any one of claims 10 to 18 is implemented.

22. A non-volatile computer-readable storage medium, storing computer program instructions, wherein when the computer program instructions are executed by a processor, the method according to any one of claims 10 to 18 is implemented.
